# EUROPÄISCHE PATENTSCHRIFT

(11) **EP 1 782 975 B1**
(45) Veröffentlichungstag und Bekanntmachung des Hinweises auf die Patenterteilung: **22.06.2011**
(21) Anmeldenummer: 06119994.9
(22) Anmeldetag: 01.09.2006
(51) Int. Cl.: B60G 3/01, F16C 29/02, F16C 27/06

(54) **Führungselement für ein Führungsbahn-Element in einer Radaufhängung eines Fahrzeugs**
Guide element for rail guide element in a vehicle suspension
Elément de guidage pour rail de guidage dans une suspension pour véhicule

(30) Priorität: 04.11.2005 DE 102005052658
(43) Veröffentlichungstag der Anmeldung: 09.05.2007
(73) Patentinhaber: Bayerische Motoren Werke Aktiengesellschaft, 80809 München (DE)
(72) Erfinder: Stenzenberger, Alfred, 86681 München (DE)
(74) Vertreter: Schmidt, Günter H. H.

(56) Entgegenhaltungen:
- EP-A1- 0 878 332
- DE-U1- 29 519 108
- FR-A1- 2 537 226
- US-A- 2 070 289
- US-A- 5 993 065

## Beschreibung

Die Erfindung betrifft ein Führungselement für ein Führungsbahn-Element in einer Radaufhängung eines Fahrzeugs, wobei eines der Elemente im wesentlichen karosseriefest und das andere Element im wesentlichen radfest angeordnet ist und zwischen diesen Elementen eine eine Verschiebebewegung des Führungselements auf dem Führungsbahn-Element ermöglichende Gleitlagerung ausgebildet ist. Als Stand der Technik ist neben der nicht vorveröffentlichen deutschen Patentanmeldung 10 2004 048 789 die US-A-2070289 zu nennen.

Herkömmliche Radaufhängungen erfüllen die kinematischen und elastokinematischen Anforderungen an die Führung des Fahrzeug-Rades mit kinematischen Ketten von Lenkern und Gelenken, die den Radträger und damit das Rad gegenüber dem Fahrzeug-Aufbau führen. Für hohe Ansprüche an Fahrdynamik und Fahrkomfort hat sich beispielsweise das Doppelquerfenker-Prinzip und dessen Varianten wie Raumlenker- oder Fünflenkerachsen durchgesetzt. Weiteren bekannten Stand der Technik bilden Radführungen mit körperlich ausgebildeten sog. Führungsbahn-Elementen, längs derer Führungselemente verschiebbar sind. So zeigt bspw. die alte deutsche Patentschrift 613 775 eine lenkbare Starrachse mit einer Radführung in Vertikalrichtung, die durch ein lineares im wesentlichen vertikal ausgerichtetes und mit dem Radträger starr verbundenes Führungsrohr gebildet wird, innerhalb dessen eine sich an der Starrachse abstützende Spindel längsverschiebbar geführt ist. Eine im Aufbau ähnliche Einzelradaufhängung ist im US-Patent 2,992,013 gezeigt.

In der eingangs genannten nicht vorveröffentlichen deutschen Patentanmeldung 10 2004 048 789 ist eine Fahrzeug-Radführung mit körperlich ausgebildeten Führungsbahn-Elementen, auf denen sog. Führungselemente längsverschiebbar angeordnet sind, weiter ausgearbeitet. Insbesondere sind hierin - abweichend vom genannten relativ alten Stand der Technik - räumlich gekrümmt verlaufende Führungsbahn-Elemente gezeigt. Auf bzw. längs diesen sind wälzgelagerte Führungselemente verschiebbar, wobei vorzugsweise das Führungsbahn-Element an der Karosserie bzw. am Aufbau des Fahrzeugs befestigt ist, während das zugehörige Führungselement dem jeweiligen Fahrzeug-Rad zugeordnet und daher an einem Radträger oder dgl. befestigt ist. (Es sei darauf hingewiesen, dass auch die umgekehrte Zuordnung möglich ist). In dieser Patentanmeldung ist ferner auf die Möglichkeit einer Gleitlagerung zwischen dem Führungselement und dem Führungsbahn-Element hingewiesen.

Hiermit soll nun für eine solche Einheit von Führungselement und Führungsbahn-Element in einer Fahrzeug-Radaufhängung nach dem Oberbegriff des Anspruchs 1 eine günstig gestaltete Gleitlagerung aufgezeigt werden ( = Aufgabe der vorliegenden Erfindung).
Die Lösung dieser Aufgabe ist dadurch gekennzeichnet, dass die Gleitlagerung durch im Führungselement gelagerte ringsektorförmige Gleitelemente gebildet wird, die zusammen das Führungsbahn-Element ringförmig umgeben und dabei geringfügig voneinander beabstandet und geringfügig gegeneinander beweglich sind.

Zur Realisierung einer exakten Radführung sollte das Führungselement möglichst exakt auf dem Führungsbahn-Element geführt sein, ohne im Zusammenhang mit einer Längsverschiebung nicht stets reproduzierbare geringfügige Bewegungen quer zur Längsachse des Führungsbahn-Elements auszuführen. Daher sind grundsätzlich an die Oberflächenqualität sowohl des Führungsbahn-Elements als auch an diejenige der mit diesem zusammenwirkenden Gleitlagerung am Führungselement relativ hohe Anforderungen zu stellen, Um diese Anforderungen auf ein realistisches Maß zu begrenzen, werden anstelle eines grundsätzlich möglichen ringförmigen Gleitelementes, welches im Führungselement vorgesehen sein könnte und das Führungsbahn-Element ringförmig umgibt, mehrere Gleitelemente quasi in einer Ebene nebeneinander vorgeschlagen, die jeweils einen Sektor eines solchen ringförmigen Gleitelementes beschreiben und dabei jeweils geringfügig voneinander beabstandet bzw. gegeneinander beweglich sind. Zusammen umgeben bzw. umschließen diese in einer zur Längsachse des Führungsbahn-Elementes senkrechten Ebene angeordneten sog. ringsektorförmigen Gleitelemente mit dazwischen liegenden Spalten das Führungsbahn-Element (ebenfalls) ringförmig.

Zur Schaffung einer im Hinblick auf die Fahrzeug-Fahrdynamik günstigen Radführung ist eine räumlich mit nicht konstantem Radius gekrümmt verlaufende Führungsbahn bzw. ein entsprechendes Führungsbahn-Element mit unterschiedlicher Krümmung an verschiedenen Stellen erforderlich. Eine einfache, herkömmliche Gleitlager-Lösung kann für eine solche gebogene Führungsbahn jedoch nur äußerst eingeschränkt verwendet werden. Weiter vorgeschlagen wird daher, in Richtung der Längsachse des Führungsbahn-Elements betrachtet mehrere Gleitelemente übereinander anzuordnen, die dann im Rahmen einer Verschiebebewegung des Führungselements auf dem Führungsbahn-Element in Richtung senkrecht zur Längsachse desselben geringfügig gegeneinander verschiebbar sind. Vorzugsweise sind dabei in Richtung der Längsachse des Führungsbahn-Elements betrachtet in zwei Ebenen einander benachbarte Gleitelemente derart angeordnet, dass sich besagte Spalte zwischen den ringsektorförmigen Gleitelementen der ersten Ebene nicht geradlinig in den Spalten zwischen den ringsektorförmigen Gleitelementen der zweiten Ebene fortsetzen. Hiermit ist eine möglichst genau definierte Führung gewährleist.

Die vorzugsweise in Kunststoff ausgeführten Gleitelemente können mit ihrer dem Führungsbahnelement abgewandten Seite mit einem im wesentlichen ringförmigen Elastomerelement verbunden sein (bspw. über Vulkanisation), das in einer bevorzugten Ausführungsform zumindest geringfügig gelenkig in einem Gehäuse des Führungselements gelagert ist. Mit Hilfe dieses Elastomerelements werden die einzelnen Gleitelemente sicher gehalten und können dabei zumindest geringfügig gegeneinander bewegt werden, so dass hierdurch eine optimale Funktion sichergestellt ist. Vorteilhafterweise können über dieses Elastomerelement bzw. eine entsprechende Elastomerschicht nicht nur Querschnittsänderungen im Führungsbahn-Element (insbesondere hervorgerufen durch einen gekrümmten Verlauf desselben) sowie Unebenheiten in der Oberfläche des Führungsbahn-Elementes ausgeglichen werden, sondern es kann über dieses Elastomerelement auch eine Entkopplung des Fahrzeugsaufbaus von Stößen und Körperschallschwingungen aus der Radaufhängung erfolgen. Eine fakultativ vorgeschlagene zusätzliche zumindest geringfügige gelenkige Beweglichkeit des genannten Elastomer-Elements gegenüber einem Gehäuse des Führungselements, die im Rahmen des Zusammenwirkens mehrerer Führungsbahn-Elemente mit zugehörigen Führungselementen entsprechend der eingangs genannten deutschen Patentanmeldung 10 2004 048 789 hilfreich sein kann, kann dabei auf unterschiedliche Weise hergestellt werden, wobei einer Ausführung in Form eines Kugelgelenks der Vorzug gegeben wird. Zurückkommend auf die sog. Gleitelemente können von diesen so viele sowohl in einer zur Längsachse des Führungsbahn-Elements im wesentlichen senkrechten Ebene als auch in Richtung dieser Längsachse betrachtet hintereinander angeordnet vorgesehen sein, dass diese Gleitelemente als Noppen bezeichnet werden können bzw. in Form einer Vielzahl von Noppen ausgebildet sind. Im Hinblick auf eine einfache Herstellung können dabei die Noppen über ein Netz oder dgl. miteinander verbunden sein, wobei diese Verbindung jedenfalls zeitlich vor Einbindung in das Elastomerelement flexibel ist.

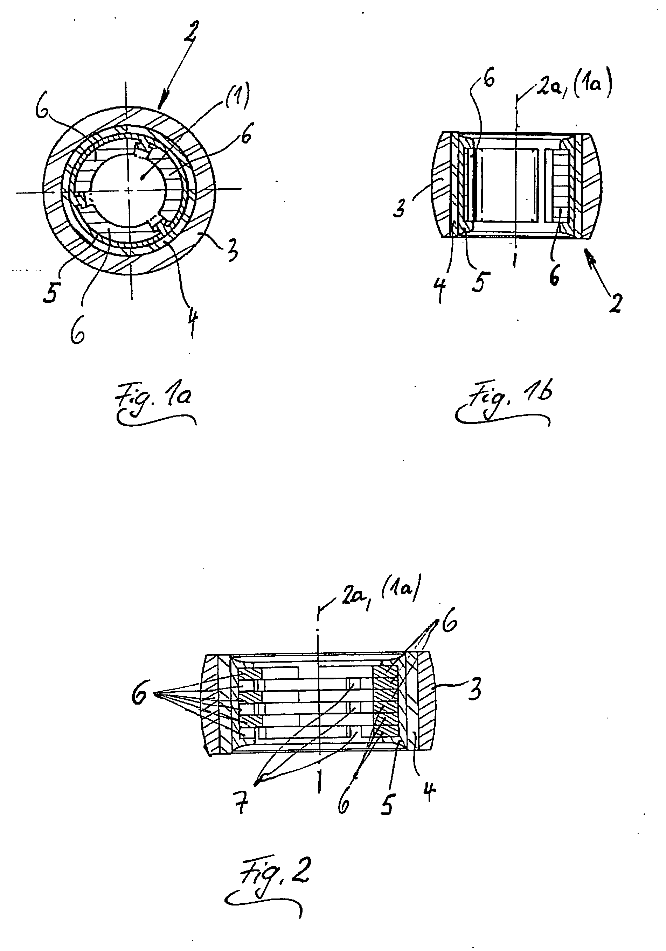

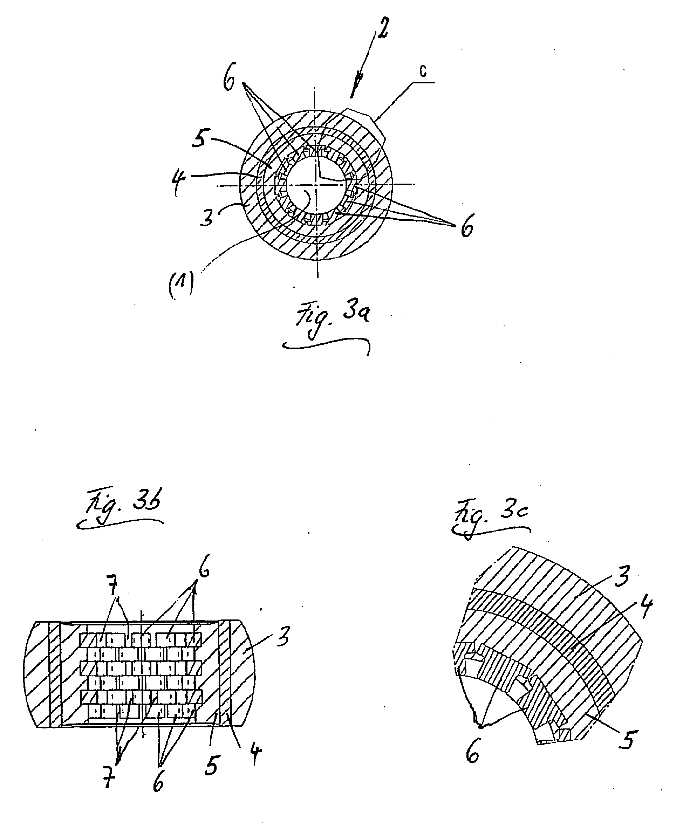

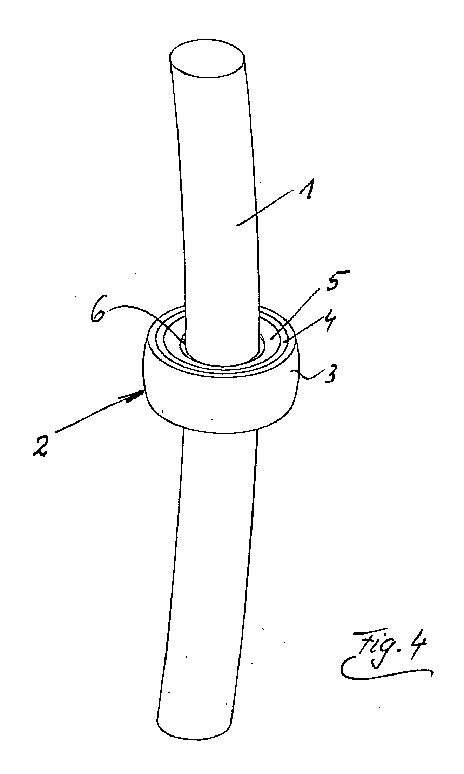

Im folgenden wird die Erfindung anhand bevorzugter Ausführungsbeispiele weiter erläutert, wobei die beigefügten **Figuren 1a, 1b** einen Querschnitt bzw. einen Längsschnitt durch eine erste Ausführungsform eines Führungselementes zeigen, während in Figur 2 in einer Darstellung entsprechend Fig.1b eine zweite Ausführungsform und in den Figuren 3a, 3b in Darstellungen entsprechend Fig.1a, 1b eine dritte Ausführungsform eines Führungselementes dargestellt ist. **Figur 3c** zeigt das Detail C aus Fig.3a, während in Figur 4 eine Ansicht eines Führungselements allgemein auf einem Führungsbahn-Element dargestellt ist.

Zunächst auf Fig.4 Bezug nehmend ist mit der Bezugsziffer 1 ein Führungsbahn-Element in einer Radaufhängung eines Fahrzeugs bezeichnet, das im wesentlichen karosseriefest angeordnet ist. Auf diesem im Querschnitt kreisförmigen Führungsbahn-Element 1 ist ein lediglich teilweise dargestelltes Führungselement 2, das im wesentlichen radfest angeordnet ist, über eine Gleitlagerung in Richtung der geringfügig gekrümmt verlaufenden Längsachse 1a des Führungsbahn-Elements 1 verschiebbar gelagert; vgl. auch die eingangs genannte deutsche Patentanmeldung 10 2004 048 789. In Fig.4 erkennt man von diesem Führungselement 2 einen äußeren sog. Kugelschicht-Hohlkörper 3, der analog einem Kugelgelenk in einem nicht dargestellten Gehäuse des Führungselements 2 bzw. in einer in dieses Gehäuse eingearbeitete Kugelschale gelagert ist. Das genannte Gehäuse selbst ist letztlich an einem Radträger, an welchem ein Rad des Fahrzeugs drehbar befestigt ist, angebunden. Der Kugelschicht-Hohlkörper 3 weist zentral einen kreiszylindrischen Hohlraum auf, in dem zunächst eine kreiszylindrische Hülse 4 und innerhalb dieser eine Elastomerschicht 5 (auch Elastomerelement 5 genannt) vorgesehen sind, in der/dem Gleitelemente 6 angeordnet sind, die auf der Oberfläche des Führungsbahn-Elements 1 aufliegen, so dass der Kugelschicht-Hohlkörper 3 und somit das Führungselement 2 auf dem Führungsbahn-Element 1 gleitgelagert verschiebbar ist.

In den Figuren 1a, 1b ist ein erstes Ausführungsbeispiel des Führungselements 2 gezeigt, und zwar in Fig.1 a in einem zur Längsachse 2a des Führungselementes 2 bzw. des Kugelschicht-Hohlkörpers 3 desselben senkrechten Quer-Schnitt und in **Fig.1b** in einem diese Längsachse 2a enthaltenden Längs-Schnitt, wobei die Längsachse 2a des Führungselementes 2 im jeweiligen Ort desselben auf dem Führungsbahn-Element 1 mit der dortigen zumeist geringfügig gekrümmten Längsachse 1 a (vgl. Fig.4) im wesentlichen zusammenfällt. In diesen Figuren 1a, 1b erkennt man neben bzw. innerhalb der an der kreiszylindrischen Innenwand des Kugelschicht-Hohlkörpers 3 anliegenden ebenfalls bezüglich der Längsachse 2 kreiszylindrischen bereits genannten Hülse 4 ein als an die Innenwand dieser Hülse 4 als Schicht anvulkanisiertes sog. Elastomerelement 5. In diesem Elastomerelement 5 sind mehrere, hier drei, sog. Gleitelemente 6 vorzugsweise durch Vulkanisation formschlüssig eingebunden. Jedes Gleitelement 6 erstreckt sich - wie aus Fig.1a hervorgeht - über einen Sektor eines Kreisrings, weshalb jedes Gleitelement als "ringsektorförmig" bezeichnet werden kann. In Richtung der Längsachse 2a erstreckt sich jedes Gleitelement 6 nahezu über die gesamte Länge des Kugelschicht-Hohlkörpers 3 bzw. ist um ein solches Stück kürzer, dass - wie Fig. 1b zeigt - das Gleitelement 6 auch nach oben und unten hin durch das Elastomerelement 5 gehalten wird. Jedes Gleitelement 6 ist bei diesem Ausführungsbeispiel somit durch einen Sektor eines kreisförmigen Hohl-Zylinders gebildet, wobei die dem Führungsbahn-Element 1 zugewandte sog. "Innenwand" dieses genannten Hohl-Zylinders bzw. jedes Gleitelementes 6 dem Innen-Radius des Hohl-Zylinders bzw. der Oberfläche des Führungsbahn-Elementes 1 entsprechend gekrümmt ist. Die hier drei Gleitelemente 6 sind dann solchermaßen angeordnet, dass sie das Führungsbahn-Element 1 ringförmig umgeben, wobei zwischen einander benachbarten Gleitelementen jeweils ein Spalt 7 vorgesehen ist, der parallel zur Längsachse 2a verläuft. Der Hintergrund für die Konstruktion wurde weiter oben näher erläutert, nämlich dass das Führungselement 2 möglichst exakt auf dem Führungsbahn-Element 1 geführt sein muss, ohne dass an die Oberflächenqualität des Führungsbahn-Elements 1 und an diejenige der mit diesem zusammenwirkenden Gleitelemente 6 allzu hohe Anforderungen gestellt werden müssen.

**Fig.2** zeigt - in einer Darstellung analog Fig.1b - eine abgewandelte Ausführungsform als zweites Beispiel, wonach die einzelnen Gleitelemente 6 in Richtung der Längsachse 2a wesentlich kürzer als beim Ausführungsbeispiel nach den Figuren 1a, 1b ausgeführt sind und dafür mehrere solche Gleitelemente 6 quasi übereinander gestapelt im Führungselement 2 vorgesehen sind. Analog dem ersten Ausführungsbeispiel nach den Figuren 1a, 1b sind in der zur Längsachse 2a senkrechten Ebene eines Gleitelementes 6, das wiederum ringsektorförmig gestaltet ist, mehrere - hier drei - solche ringsektorförmigen Gleitelemente 6 vorgesehen, die jeweils unter Zwischenlage eines Spaltes 7 das Führungsbahn-Element (1) ringförmig umschließen, wobei die dem Führungsbahn-Element (1) zugewandte Oberfläche der Gleitelemente 6 (wiederum) angepasst an die Krümmung bzw. an den Radius des im Querschnitt kreisförmigen Führungsbahn-Elementes gekrümmt ist. Indem bei diesem zweiten Ausführungsbeispiel jedoch übereinander liegend ebenfalls mehrere Gleitelemente 6 vorgesehen sind, die - soweit dies das Elestomerelement 5 zulässt - geringfügig seitlich gegeneinander, d.h. quer zur Längsachse 2a verschiebbar sind, kann auf Querschnittsänderungen im Führungsbahn-Element 1, die insbesondere aus dessen Krümmung in Richtung der Längsachse 1a resultieren, mit derartigen geringfügigen Verschiebungen besser reagiert werden. Wie aus Fig.2 ersichtlich wird, sind dabei in Richtung der Längsachse 2a betrachtet in zwei Ebenen einander benachbarte Gleitelemente 6 derart angeordnet, dass sich die Spalte 7 zwischen den ringsektorförmigen Gleitelementen 6 der ersten Ebene nicht geradlinig in den Spalten 7 zwischen den ringsektorförmigen Gleitelementen 6 der zweiten Ebene fortsetzen. Hiermit ist also eine möglichst genau definierte Führung gewährleist.

Das dritte Ausführungsbeispiel nach den Figuren 3a - 3c stellt praktisch eine Weiterbildung des Ausführungsbeispiels nach Fig.2 dar, indem nun die Sektoren der einzelnen ringsektorförmigen Gleitelemente 6 erheblich verkleinert sind, so dass in einer zur Längsachse 2 senkrechten Ebene erheblich mehr als drei Gleitelemente 6 kreisringförmig angeordnet sind, die zusammen unter Berücksichtigung von Spalten 7 zwischen den einzelnen Gleitelementen 6 wiederum das Führungsbahn-Element (1) ringförmig umgeben. Dabei sind abermals solche gegenüber dem zweiten Ausführungsbeispiel kleineren Gleitelemente 6 in mehreren (in Richtung der Längsachse 2a betrachtet) übereinander liegenden Ebenen vorgesehen. Mit dieser Anordnung und Dimensionierung der Gleitelemente 6 können diese auch als Noppen bezeichnet werden, wobei darauf hingewiesen sei, dass es nicht erforderlich ist, diese Noppen wie figürlich dargestellt quasi schachbrettmusterartig über der Innenfläche des Hülse 4 bzw. der/des darauf aufgebrachten Elastomerschicht/Elastomerelementes 5 zu verteilen. Vielmehr können solche Gleitelemente 6 in Form einer Vielzahl von Noppen auch andersartig angeordnet über der besagten Innenfläche verteilt werden. Vorzugsweise sind jedoch die Gleitelemente 6 bzw. Noppen solchermaßen angeordnet, dass Spalte 7 zwischen im wesentlichen in einer Ebene (senkrecht zur Längsachse 2a) liegenden Gleitelementen 6 nicht geradlinig in Spalte 7 zwischen den Gleitelementen 6 einer dieser Ebeene direkt benachbarten Ebene übergehen, wie aus der Darstellung nach Fig.3b hervorgeht. Schließlich zeigt Fig.3c eine mögliche Gestaltung, wie die Gleitelemente 6 formschlüssig in dem Elastomerelement 5 eingebunden sein können, wobei aus dieser Fig.3c weiterhin hervorgeht, dass auch hier die dem Führungsbahn-Element (1) zugewandte Oberfläche jedes Gleitelementes 6 u.a. zur Verringerung der Flächenpressung durch eine möglichst große Kontaktfläche an das Führungsbahn-Element (1) angepasst gekrümmt bzw. nach innen gewölbt ist.

Vereinfacht werden kann das Herstellverfahren für ein solches Führungselement gemäß den Figuren 3a - 3c dabei, indem die noppenartigen Gleitelemente 6 zunächst, d.h. vor der Einbindung in das Elastomerelement 5, über ein Netz oder dgl. ausreichend flexibel miteinander verbunden sind. Insbesondere bei diesem Ausführungsbeispiel, ggf. bzw. in geringerem Maße auch bei den anderen Ausführungsbeispielen kann es weiterhin empfehlenswert sein, die Gleitelemente 6 auf einen kleineren freien Querschnitt als den Durchmesser des Führungsbahn-Elementes (1) in das Elastomerelement 5 einzuvulkanisieren bzw. allg. im Führungselement 2 einzubinden, so dass das Führungselement 2 quasi unter Vorspannung stehend auf das Führungsbahn-Element 1 aufgesetzt wird.

Mit den vorgeschlagenen Maßnahmen wird eine sichere Gleitführung eines bzw. des sog. Führungselementes 2 auf einem bzw. dem gekrümmt verlaufenden Führungsbahn-Element 1 in einer Radaufhängung eines Fahrzeugs ermöglicht, die gegenüber den bislang bekannten Lösungsansätzen die Anforderungen an die Oberflächengüte des Führungsbahn-Elementes 1 sowie an die Querschnittstoleranzen generell reduziert, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Führungselement (2) für ein Führungsbahn-Element (1) in einer Radaufhängung eines Fahrzeugs, wobei eines der Elemente (1 oder 2) im wesentlichen karosseriefest und das andere Element (2 oder 1) im wesentlichen radfest angeordnet ist und zwischen diesen Elementen (1, 2) eine eine Verschiebebewegung des Führungselements (2) auf dem Führungsbahn-Element (1) ermöglichende Gleitlagerung ausgebildet ist,
**dadurch gekennzeichnet, dass** die Gleitlagerung durch im Führungselement (2) gelagerte ringsektorförmige Gleitelemente (6) gebildet wird, die zusammen das Führungsbahn-Element (1) ringförmig umgeben und dabei geringfügig voneinander beabstandet und geringfügig gegeneinander beweglich sind.

2. Führungselement nach Anspruch 1,
**dadurch gekennzeichnet, dass** in Richtung der Längsachse (1 a, 2a) des Führungsbahn-Elements (1) oder des Führungselements (2) betrachtet ein Gleitelement (6) oder mehrere Gleitelemente (6) übereinander angeordnet sind.

3. Führungselement nach Anspruch 2,
**dadurch gekennzeichnet, dass** in Richtung der Längsachse (1a, 2a) des Führungsbahn-Elements (1) oder des Führungselements (2) betrachtet in zwei Ebenen einander benachbarte Gleitelemente (6) derart angeordnet sind, dass sich Spalte (7) zwischen den ringsektorförmigen Gleitelementen (6) der ersten Ebene nicht geradlinig in den Spalten (7) zwischen den ringsektorförmigen Gleitelementen (6) der zweiten Ebene fortsetzen.

4. Führungselement nach einem der vorangegangenen Ansprüche,
**dadurch gekennzeichnet, dass** die vorzugsweise in Kunststoff ausgeführten Gleitelemente (6) mit ihrer dem Führungsbahn-Element (1) abgewandten Seite mit einem im wesentlichen ringförmigen Elastomerelement (5) verbunden sind, das zumindest geringfügig gelenkig in einem Gehäuse des Führungselements (2) gelagert ist.

5. Führungselement nach einem der vorangegangenen Ansprüche,
**dadurch gekennzeichnet, dass** die Gleitelemente (6) in Form einer Vielzahl von Noppen ausgebildet sind.

6. Führungselement nach Anspruch 5,
**dadurch gekennzeichnet, dass** die Noppen über ein Netz oder dgl, miteinander verbunden sind, wobei diese Verbindung vor Einbindung in das Elastomerelement (5) flexibel ist.

## Claims

1. A guide element (2) for a guide path element (1), in a wheel suspension of a vehicle, wherein one of the elements (1 or 2) is arranged substantially fixed to the body and the other element (2 or 1) is arranged substantially fixed to the wheel, and a sliding bearing allowing a displacement movement of the guide element (2) on the guide path element (1) is formed between these elements (1, 2), **characterised in that** the sliding bearing is formed by ring sector-shaped sliding elements (6) mounted in the guide element (2), which together annularly surround the guide path element (1) and, in the process, are slightly spaced apart from one another and slightly movable with respect to one another.

2. A guide element according to claim 1, **characterised in that**, viewed in the direction of the longitudinal axis (1a, 2a) of the guide path element (1) or of the guide element (2), a sliding element (6) or a plurality of sliding elements (6) are arranged one above the other.

3. A guide element according to claim 2, **characterised in that**, viewed in the direction of the longitudinal axis (1a, 2a) of the guide path element (1) or of the guide element (2), mutually adjacent sliding elements (6) are arranged in two planes in such a way that gaps (7) between the ring sector-shaped sliding elements (6) of the first plane are not continued linearly in the gaps (7) between the ring sector-shaped sliding elements (6) of the second plane.

4. A guide element according to any one of the preceding claims, **characterised in that** the sliding elements (6) preferably configured in plastics material are connected by their side remote from the guide path element (1) to a substantially annular elastomer element (5), which is mounted at least in a slightly articulated manner in a housing of the guide element (2).

5. A guide element according to any one of the preceding claims, **characterised in that** the sliding elements (6) are in the form of a large number of knobs.

6. A guide element according to claim 5, **characterised in that** the knobs are connected to one another by a network or the like, this connection being flexible before interconnection with the elastomer element (5).

## Revendications

1. Elément de guidage (2) d'un élément de rail de guidage (1) d'une suspension de roue de véhicule selon lequel, l'un des éléments (1 ou 2) est monté de manière pratiquement solidaire de la carrosserie et l'autre élément (2 ou 1) est monté de manière pratiquement solidaire de la roue et un palier lisse permettant un mouvement de coulissement de l'élément de guidage (2) sur l'élément de rail de guidage (1) est prévu entre les éléments (1, 2),
élément de guidage **caractérisé en ce que**
le palier lisse est réalisé par des éléments de glissement (6) en forme de secteurs annulaires montés dans l'élément de guidage (2), et ces éléments de glissement entourent ensemble de façon annulaire, l'élément de rail de guidage (1) et ils sont légèrement écartés les uns des autres et peuvent légèrement bouger les uns par rapport aux autres.

2. Elément de guidage selon la revendication 1,
**caractérisé en ce que**
un élément de glissement (6) ou plusieurs éléments de guidage (6) superposés sont prévus dans la direction de l'axe longitudinal (1a, 2a) de l'élément de rail de guidage (1) ou de l'élément de guidage (2).

3. Elément de guidage selon la revendication 2,
**caractérisé en ce que**
dans la direction de l'axe longitudinal (1a, 2a) de l'élément de rail de guidage (1) ou de l'élément de guidage (2), il y a des éléments de glissement (6) voisins les uns des autres dans deux plans,
les intervalles (7) entre les éléments de glissement (6) en forme de secteurs annulaires dans le premier plan, ne se prolongent pas en ligne droite dans les intervalles (7) entre les éléments de glissement en forme de secteurs annulaires (6) dans le second plan.

4. Elément de guidage selon l'une des revendications précédentes,
**caractérisé en ce que**
les éléments de glissement (6) réalisés de préférence en matière plastique, sont reliés à un élément en élastomère (5) pratiquement de forme annulaire par leur côté non tourné vers l'élément de rail de guidage (1), et cet élément est monté au moins de façon légèrement articulée dans un boîtier de l'élément de guidage (2).

5. Elément de guidage selon l'une des revendications précédentes,
**caractérisé en ce que**
les éléments de glissement (6) sont réalisés sous la forme d'un ensemble de bossages.

6. Elément de guidage selon la revendication 5,
**caractérisé en ce que**
les bossages sont reliés entre-eux par un filet ou un moyen analogue et cette liaison est souple avant l'intégration dans l'élément en élastomère (5).
